(19) Europäisches Patentamt

European Patent Office

Office européen des brevets

(11) Veröffentlichungsnummer: **0 094 481**
**B1**

(12) **EUROPÄISCHE PATENTSCHRIFT**

(45) Veröffentlichungstag der Patentschrift:
26.10.88

(21) Anmeldenummer: **83102249.6**

(22) Anmeldetag: **08.03.83**

(51) Int. Cl.⁴: **G 01 D 5/34,** G 01 D 5/30

(54) **Lichtelektrische Messeinrichtung.**

(30) Priorität: **19.05.82 DE 3218903**

(43) Veröffentlichungstag der Anmeldung:
**23.11.83 Patentblatt 83/47**

(45) Bekanntmachung des Hinweises auf die Patenterteilung:
**26.10.88 Patentblatt 88/43**

(84) Benannte Vertragsstaaten: ╱
**AT CH FR GB IT LI NL SE**

(56) Entgegenhaltungen:
**FR - A - 1 415 703**
**FR - A - 2 091 518**
**FR - A - 2 335 825**

(73) Patentinhaber: **Dr. Johannes Heidenhain GmbH,
Nansenstrasse 17, D-8225 Traunreut (DE)**

(72) Erfinder: **Ernst, Alfons, Dipl.-Ing., Traunring 62,
D-8225 Traunreut (DE)**

**Beschreibung**

Die Erfindung betrifft eine lichtelektrische Messeinrichtung zur Bestimmung von Lageabweichungen eines Objekts gemäss dem Oberbegriff des Anspruchs 1.

Die FR-A-1 415 703 offenbart eine Koordinatenmessmaschine, bei der in zwei Messrichtungen jeweils eine inkrementale Messteilung von einer Abtastteilung auf lichtelektrischem Wege zur Bestimmung der Abmessungen von Prüfobjekten abgetastet wird.

Aus der FR-A-2 091 518 ist eine lichtelektrische Messeinrichtung zur Bestimmung der Lageabweichungen eines Objekts bekannt, bei der ein periodisch schwingender beleuchteter Spalt zum Erzeugen eines oszillierenden Lichtbündels zur Abtastung des zu messenden Objekts und ein optisches System zur Abbildung des am Objekt reflektierten oszillierenden Lichtbündels auf den schwingenden Spalt als Abtasteinheit vorgesehen sind. Der schwingende Spalt tastet in seiner Schwingungsebene die Lage des Spaltbildes periodisch ab, die ein Mass für die Lageabweichung des zu vermessenden Objekts darstellt. Zur Feststellung grosser Lageabweichungen des zu messenden Objekts ist das Schwingsystem im Gesichtsfeld der Abbildungsoptik verschiebbar angeordnet und zur Ermittlung des Verschiebeweges mit einem Längenmesssystem mechanisch gekoppelt.

Bei dieser Messeinrichtung ist der Spalt an einer schwingenden Saite befestigt. Dieses Schwingsystem bedarf zur Anregung eines elektromechanischen Oszillators und einer Amplitudenregelung mittels eines Geschwindigkeitssensors sowie eines Servosystems zur symmetrischen Einstellung des Schwingspaltes bezüglich der Normalen eines mit dem zu messenden Objekt verbundenen Spiegels durch die Mitte des Abbildungsobjektivs; ferner ist zur Ermittlung der Verschiebung des Schwingspaltes ein gesondertes Längenmesssystem erforderlich.

Der Erfindung liegt die Aufgabe zugrunde, eine lichtelektrische Messeinrichtung der oben erwähnten Gattung anzugeben, die einen wesentlich vereinfachten Aufbau ohne Einbusse an Messgenauigkeit aufweist.

Diese Aufgabe wird erfindungsgemäss durch die kennzeichnenden Merkmale des Anspruchs 1 gelöst.

Die mit der Erfindung erzielten Vorteile bestehen insbesondere darin, dass mit den vorgeschlagenen Massnahmen eine preisgünstige Messeinrichtung mit grossem Messbereich und hoher Genauigkeit ermöglicht wird.

Vorteilhafte Weiterbildungen der Erfindung entnimmt man den Unteransprüchen.

Ausführungsbeispiele der Erfindung werden in der Zeichnung näher erläutert.

Es zeigen

Figur 1 eine schematische Ansicht einer Messeinrichtung nach der Erfindung;

Figur 2 ein Diagramm mit Signalverläufen und

Figur 3–6 verschiedene Ausführungen von Spaltplatten mit Merkmalen der Erfindung.

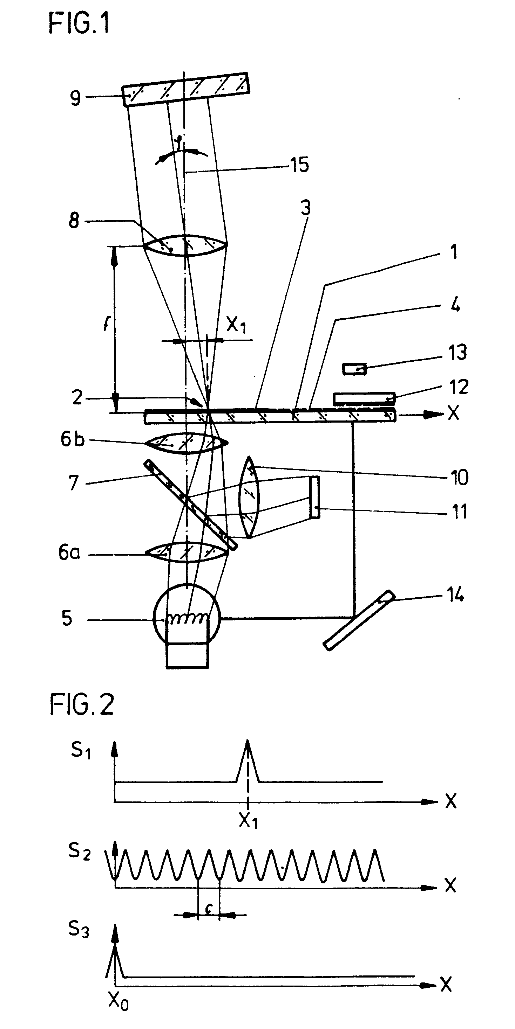

In Figur 1 ist eine erfindungsgemässe Messeinrichtung schematisch dargestellt. Auf einer transparenten Platte 1 sind ein Spalt 2 einer lichtundurchlässigen Blende 3 und eine Teilung 4 aufgebracht. Der Spalt 2 wird mittels einer Lampe 5 über Linsen 6a, 6b und einen Strahlenteiler 7 beleuchtet. Das am Spalt 2 austretende Lichtbündel durchläuft ein Abbildungsobjektiv 8 und trifft auf einen Planspiegel 9, der an einem nicht gezeigten, zu messenden Objekt befestigt ist. Das am Planspiegel 9 reflektierte Lichtbündel durchläuft wieder das Abbildungsobjektiv 8 und wird in dessen Brennebene abgebildet, in der sich der Spalt 2 befindet, der gleichzeitig als Abtastelement dient. Das den Spalt 2 wiederum durchsetzende Lichtbündel wird vom Objektiv 6b, dem Strahlenteiler 7 und einer Linse 10 auf ein Photoelement 11 geworfen, das zur Auswertung der sich während der Abtastung ergebenden Lichtstromänderungen dient. Die Teilung 4 wird lichtelektrisch mit Hilfe einer Abtastplatte 12, auf der mindestens ein der Teilung 4 entsprechendes Teilungsfeld vorhanden ist, sowie mit einer entsprechenden Anzahl von Photoelementen 13 abgetastet; die Teilung 4 und die Abtastplatte 12 werden von der Lampe 5 über einen Spiegel 14 beleuchtet.

Die Normale zum Planspiegel 9 schliesst mit der optischen Achse 15 des Autokollimators einen Winkel $\varphi$ ein. Zur Bestimmung dieses Winkels $\varphi$ ist die transparente Platte 1 mit dem Spalt 2 und der Teilung 4 senkrecht oder schräg zur Richtung des Spaltes 2 verschiebbar angeordnet. Bei der Verschiebung der Platte 1 in Richtung x gibt es eine bestimmte Lage $x_1$, in der die Lage des Spaltes 2 mit der Lage des in der Brennebene des Abbildungsobjektivs 8 erzeugten Spaltbildes übereinstimmt und das reflektierte Lichtbündel über den Strahlenteiler 7 auf das Photoelement 11 fallen kann; gleichzeitig bewirkt diese Verschiebung eine Modulation des auf das Photoelement 13 fallenden Lichtstroms. Das periodische Ausgangssignal $S_2$ des Photoelements 13 wird in bekannter Weise ausgewertet und einem nicht gezeigten Zähler zugeführt.

Gemäss Figur 2 kann aus dem Ausgangssignal $S_1$ des Photoelements 11 und dem Ausgangssignal $S_2$ des Photoelements 13 bei der Verschiebung der Platte 1 in Richtung x die Lage $x_1$ des Spaltbildes aus der Beziehung $x_1 = z_1 \cdot C$ ermittelt werden, wobei $z_1$ die Anzahl der Hell-Dunkelperioden des Photoelements 13 und C die Gitterkonstante der Teilung 4 bedeuten. Der gesuchte Winkel ist dann mit $\varphi = \arctan x_1/f$ (f = Brennweite des Abbildungsobjektivs 8) gegeben; für kleine Winkel kann $\varphi = x_1/f = z_1 \cdot C/f$ gesetzt werden. Die Brennweite f und die Gitterkonstante C werden zweckmässig so gewählt, dass ein Zählschritt des Zählers dem gewünschten Messschritt des Winkels $\Delta\varphi$ entspricht: $\Delta\varphi = C/f$. Gegebenenfalls können durch eine Unterteilung der Periode der Teilung 4 nach bekannten Verfahren um den Faktor n, beispielsweise durch Anordnung mehrerer zueinander phasenversetzter Abtastfelder auf der Ab-

tastplatte 12 und zugeordneter Photoelemente kleinere Messschritte erzielt werden: $\Delta\varphi = C/n \cdot f$. Die Nullposition $x_0$ der Messgrösse x kann durch Abtastung einer der Teilung 4 zugeordneten Referenzmarke 16 auf der Platte 1 mittels eines nicht gezeigten Photoelements und Auswertung des Ausgangssignals $S_3$ dieses Photoelements gewonnen oder reproduziert werden.

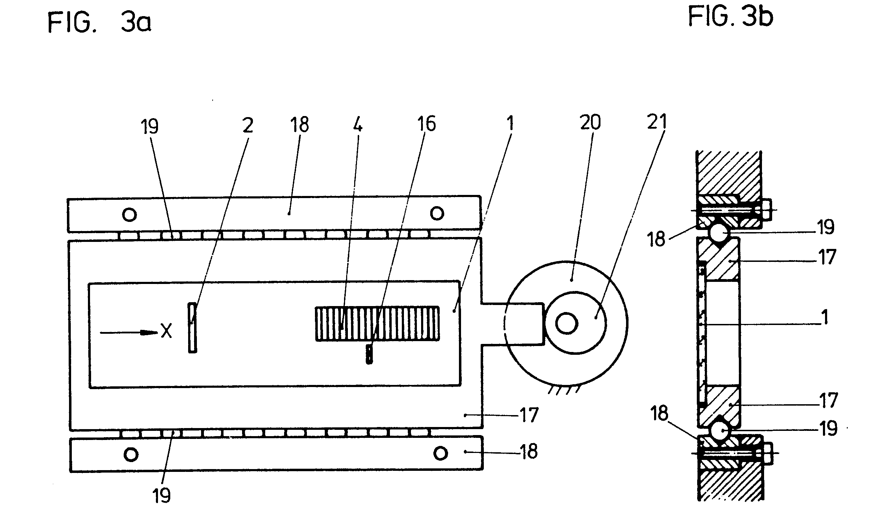

Gemäss Figur 3 ist die transparente Platte 1 mit dem Spalt 2, der Teilung 4 und der Referenzmarke 16 auf einem Träger 17 befestigt, der in einem Rahmen 18 mittels Kugeln 19 linear geführt ist. Die Bewegung der Platte 1 in Richtung x senkrecht zur Längserstreckung des Spaltes 2 erfolgt oszillierend mit Hilfe eines Motors 20 mit einem Exzenter 21, der den Träger 17 beaufschlagt.

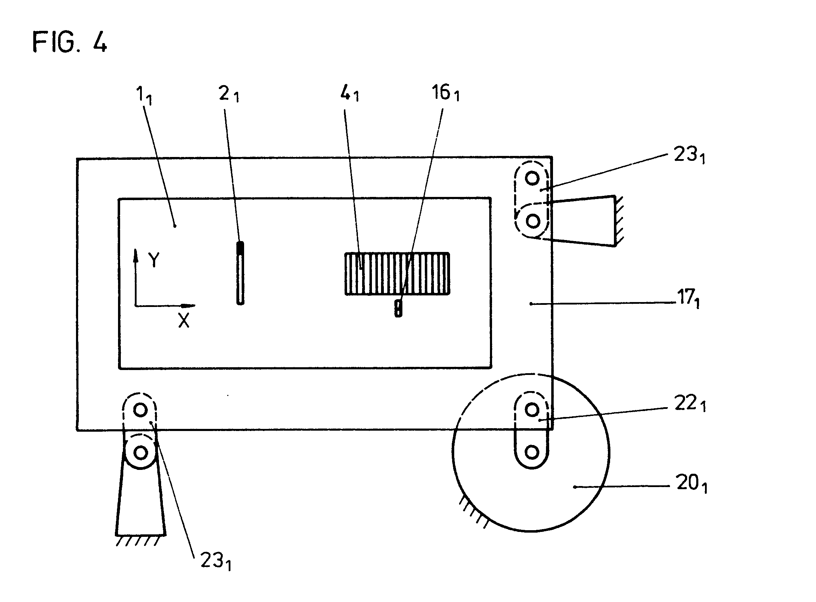

Nach Figur 4 ist eine Platte $1_1$ mit einem Spalt $2_1$, einer Teilung $4_1$ und einer Referenzmarke $16_1$ auf einem Träger $17_1$ befestigt; die Platte $1_1$ erfährt mittels eines Motors $20_1$, einer vom Motor $20_1$ angetriebenen Kurbel $22_1$ und zweier umlaufender Schwingen $23_1$ eine zweidimensionale periodische translatorische Bewegung in x- und y-Richtung eines vorgegebenen Koordinatensystems. Die Schwingen $23_1$ besitzen die gleiche Länge wie die Kurbel $22_1$ und sind parallel zu dieser angeordnet; die Schwingen $23_1$ und die Kurbel $22_1$ sind am Träger $17_1$ angelenkt.

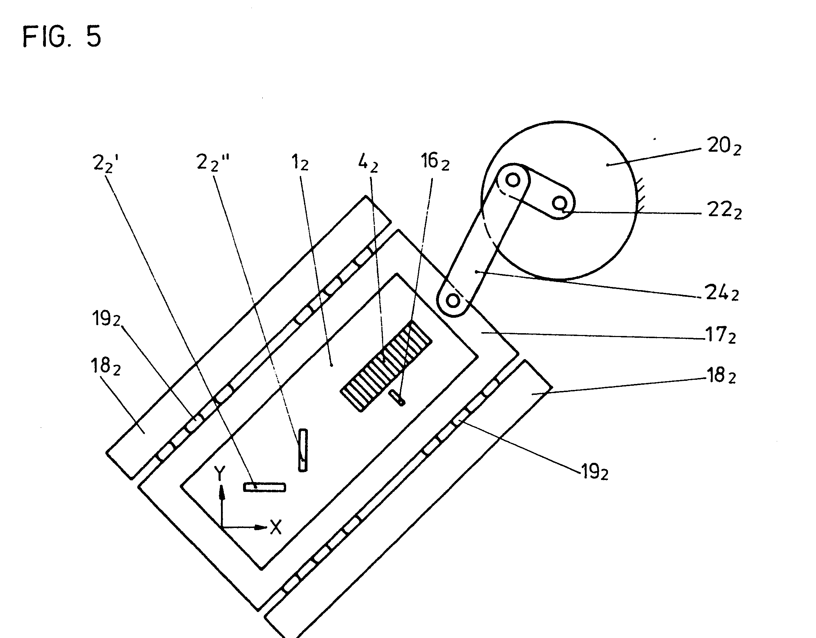

Nach Figur 5 ist eine Platte $1_2$ mit zwei senkrecht zueinander verlaufenden Spalten $2_2'$, $2_2''$, einer Teilung $4_2$ und einer Referenzmarke $16_2$ auf einem Träger $17_2$ befestigt, der in einem Rahmen $18_2$ mittels Kugeln $19_2$ linear geführt ist. Die Linearführung der Platte $1_2$ erfolgt unter einem Winkel $\pi/4$ zu einem vorgegebenen x, y-Koordinatensystem oszillierend mit Hilfe eines Motors $20_2$, einer Kurbel $22_2$ und einer Pleuelstange $24_2$, die am Träger $17_2$ angelenkt ist. Der Spalt $2_2'$ verläuft in Richtung x und der Spalt $2_2''$ in Richtung y des Koordinatensystems, so dass die Spalte $2_2'$, $2_2''$ bei der Verschiebung der Platte $1_2$ nacheinander schräg zu ihrer Richtung durch die optische Achse der Messeinrichtung wandern. Mittels der Teilung $4_2$ und der Referenzmarke $16_2$ wird die Bewegung der beiden Spalte $2_2'$, $2_2''$ gemessen, so dass die Winkellage des mit dem zu messenden Objekt verbundenen Planspiegels in den beiden Koordinatenrichtungen ermittelt werden kann.

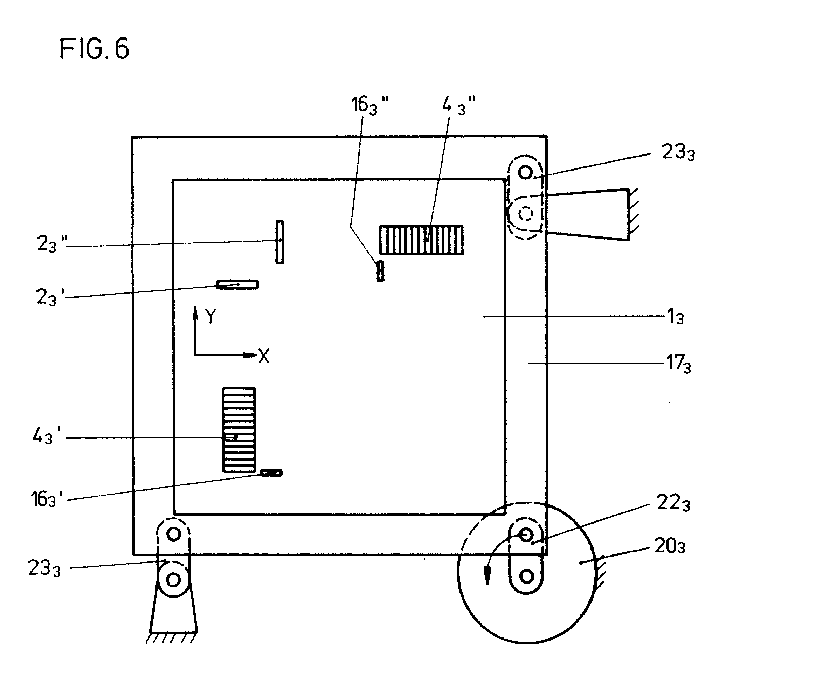

Gemäss Figur 6 ist eine Platte $1_3$ mit zwei senkrecht zueinander verlaufenden Spalten $2_3'$, $2_3''$ auf einem Träger $17_3$ befestigt und erfährt mittels eines Motors $20_3$, einer vom Motor $20_3$ angetriebenen Kurbel $22_3$ und zweier umlaufender Schwingen $23_3$ eine zweidimensionale periodische translatorische Bewegung in x- und y-Richtung eines vorgegebenen Koordinatensystems. Die Schwingen $23_3$ besitzen die gleiche Länge wie die Kurbel $22_3$ und sind parallel zu dieser angeordnet; die Schwingen $23_3$ und die Kurbel $22_3$ sind am Träger $17_3$ angelenkt. Dem Spalt $2_3'$ sind auf der Platte $1_3$ eine Teilung $4_3'$ mit einer Referenzmarke $16_3'$ und dem Spalt $2_3''$ eine Teilung $4_3''$ mit einer Referenzmarke $16_3''$ zugeordnet. Der Spalt $2_3'$ verläuft in Richtung x und der Spalt $2_3''$ in Richtung y des Koordinatensystems, so dass die Spalte $2_3'$, $2_3''$ bei der translatorischen Verschiebung der Platte $1_3$ in x- und y-Richtung nacheinander quer zu ihrer Richtung durch die optische Achse der Messeinrichtung wandern. Mittels der Teilungen $4_3'$, $4_3''$ und der zugehörigen Referenzmarken $16_3'$, $16_3''$ werden die Bewegungen der beiden Spalte $2_3'$, $2_3''$ gemessen, so dass die Winkellage des mit dem zu messenden Objekt verbundenen Planspiegels in den beiden Koordinatenrichtungen ermittelt werden kann.

In Figur 7 ist eine Messeinrichtung gezeigt, bei der in einem Gehäuse 25 ein Kollimatorrohr 26 als Lichtsender und zwei Kollimatorfernrohre 27, 28 als Lichtempfänger vorgesehen sind. Senkrecht zum Lichtsender 26 und zu den beiden Lichtempfängern 27, 28 ist eine transparente Platte $1_4$ im Gehäuse 25 auf einen Träger $17_4$ angeordnet, die mittels eines im Gehäuse 25 vorgesehenen Motors $20_4$, einer vom Motor $20_4$ angetriebenen Kurbel $22_4$ und zweier umlaufender Schwingen $23_4$ eine zweidimensionale periodische translatorische Bewegung in x- und y-Richtung eines vorgegebenen Koordinatensystems erfährt. Die Schwingen $23_4$ besitzen die gleiche Länge wie die Kurbel $22_4$ und sind parallel zu dieser angeordnet; die Schwingen $23_4$ und die Kurbel $22_4$ sind am Träger $17_4$ angelenkt. Auf der Platte $1_4$ sind ein erstes Paar eines Sendespaltes 29' und eines Empfangsspaltes 29'' und ein zweites Paar eines Sendespaltes 30' und eines Empfangsspaltes 30'' angeordnet; die Spalte 29', 29'' verlaufen zueinander fluchtend in Richtung x und die Spalte 30', 30'' zueinander fluchtend in Richtung y des Koordinatensystems. Den Spalten 29', 29'' ist auf der Platte $1_4$ eine Teilung $4_4'$ mit einer Referenzmarke $16_4'$ und den Spalten 30', 30'' eine Teilung $4_4''$ mit einer Referenzmarke $16_4''$ zugeordnet.

Die Sendespalte 29', 30' werden im Kollimatorrohr 26 von einer Lampe $5_4$ über eine Linse 31 beleuchtet; die an den Sendespalten 29', 30' austretenden Lichtbündel treffen über ein Objektiv 32 auf einen am zu messenden Objekt befestigten Planspiegel (nicht dargestellt). Das vom Planspiegel reflektierte Lichtbündel des Sendespaltes 29' wird über ein Abbildungsobjektiv 33 im Kollimatorfernrohr 27 auf den Empfangsspalt 29'' und das vom Planspiegel reflektierte Lichtbündel des Sendespaltes 30' über ein Abbildungsobjektiv 34 im Kollimatorfernrohr 28 auf den Empfangsspalt 30'' abgebildet. Das den Empfangsspalt 29'' durchsetzende Lichtbündel wird in nicht gezeigter Weise von einer Linse auf ein Photoelement und das den Empfangsspalt 30'' durchsetzende Lichtbündel von einer Linse 35 auf ein Photoelement 36 gesammelt.

Die Teilung $4_4'$ wird mittels einer Abtastplatte $12_4$ und eines Photoelements $13_4$ abgetastet; die Teilung $4_4'$ und die Abtastplatte $12_4$ werden von einer lichtemittierenden Diode 37 beleuchtet. Die Abtastung der Teilung $4_4''$ erfolgt mit analogen, nicht gezeigten Mitteln. Mittels der Teilungen $4_4'$, $4_4''$ und der zugehörigen Referenzmarken $16_4'$, $16_4''$ werden die Bewegungen der Spaltpaare 29', 29''; 30', 30'' gemessen, so dass die Winkellage des Planspiegels um zu den Spaltpaaren 29', 29'';

30′, 30″ parallele Achsen in den beiden Koordinatenrichtungen ermittelt werden kann.

Die Spalte 29′, 29″ bzw. die Spalte 30′, 30″ können auch jeweils aus einem einzigen Spalt bestehen.

Die Spalte 2, 29, 30 sowie die zugehörigen Teilungen 4 und Referenzmarken 16 auf der transparenten Platte 1 werden durch Aufdampfen einer lichtundurchlässigen Schicht auf die Platte 1 und durch nachfolgende Strukturierung dieser Schicht auf photolithographischem Wege erzeugt.

Die Messeinrichtung nach Figur 7 ist bei Ausführungen mit grossem Messbereich besonders vorteilhaft, weil der Gleichstromanteil des Signals $S_1$, der durch die Reflexion an der Rückseite der Platte 1 und der spaltbildenden Schicht entsteht, weitgehend ausgeschaltet wird.

**Patentansprüche**

1. Lichtelektrische Messeinrichtung nach dem Autokollimationsprinzip zur Bestimmung von Lageabweichungen eines Objekts mit wenigstens einem beleuchteten Spalt (2) und einem Objektiv (8) zur Erzeugung eines Lichtbündels zur Abtastung des zu messenden Objekts und zur Abbildung des am Objekt reflektierten Lichtbündels auf den beleuchteten Spalt (2) als Abtastelement, bei der die Lage des Spaltes (2), in der das Spaltbild mit dem Spalt (2) zusammenfällt, ein Mass für die Lageabweichung des Objektes darstellt und der Spalt (2) messbar verschiebbar angeordnet ist, dadurch gekennzeichnet, dass wenigstens ein Spalt (2) und wenigstens eine Messteilung (4) mit einer absolut zugeordneten Referenzmarke (16) gemeinsam in Form einer strukturierten Schicht auf einer Platte (1) aufgebracht sind, dass die Messteilung (4) zur Messung der Verschiebung X des Spaltes (2) von einer Abtastplatte (12) und einem ersten Photoelement (13) zur Erzeugung von Zählimpulsen und die Referenzmarke (16) zur Bestimmung der Nullposition der Verschiebung X von der Abtastplatte (12) und einem zweiten Photoelement zur Erzeugung eines Referenzimpulses abtastbar sind, dass zur Abtastung des Spaltbildes durch den Spalt (2) ein drittes Photoelement (11) vorgesehen ist, das ein Ausgangssignal ($S_1$) erzeugt, und dass ein Zähler zum Zählen der Zählimpulse so vorgesehen ist, dass er vom Referenzimpuls gestartet und vom Ausgangssignal ($S_1$) angehalten wird.

2. Messeinrichtung nach Anspruch 1, dadurch gekennzeichnet, dass die Platte (1) senkrecht oder schräg zur Längserstreckung des Spaltes (2) verschiebbar oder kreisend beweglich ist.

3. Messeinrichtung nach Anspruch 2, dadurch gekennzeichnet, dass die Platte (1) einen Spalt (2) und eine Messteilung (4) aufweist und eine eindimensionale periodische translatorische Bewegung senkrecht zur Längserstreckung des Spaltes (2) erfährt.

4. Messeinrichtung nach Anspruch 2, dadurch gekennzeichnet, dass die Platte ($1_1$) einen Spalt ($2_1$) und eine Messteilung ($4_1$) aufweist und eine kreisende Bewegung erfährt.

5. Messeinrichtung nach Anspruch 2, dadurch gekennzeichnet, dass die Platte ($1_2$) zwei senkrecht zueinander verlaufende Spalte ($2_2′$, $2_2″$) und eine schräg zu den Spalten ($2_2′$, $2_2″$) verlaufende Messteilung ($4_2$) aufweist und eine eindimensionale periodische translatorische Bewegung schräg zu den Spalten ($2_2′$, $2_2″$) erfährt.

6. Messeinrichtung nach Anspruch 2, dadurch gekennzeichnet, dass die Platte ($1_3$) zwei senkrecht zueinander verlaufende Spalte ($2_3′$, $2_3″$) und zwei zugeordnete Messteilunge ($4_3′$, $4_3″$) aufweist und eine kreisende Bewegung erfährt.

**Claims**

1. Photoelectric measuring arrangement according to the autocollimation principle for determining positional deviations of an object, with at least one illuminated slit (2) and an objective (8) for generating a light beam for sensing the object to be measured and for imaging the light beam reflected by the object on to the illuminated slit (2) as sensing element, in which the position of the slit (2) in which the slit image coincides with the slit (2) represents a measure of the positional deviation of the object and the slit is arranged measurably displaceable, characterized in that at least one slit (2) and at least one measuring graduation (4) with an associated absolute reference mark (16) are applied in common to a plate (1) in the form of a structured layer, in that the measuring graduation (4) can be sensed by a sensing plate (12) and a first photo element (13) for generating count pulses for the measuring of the displacement X of the slit (2) and the reference mark (16) can be sensed by the sensing plate (12) and a second photo element for generating a reference pulse for the determination of the zero position of the displacement X, in that a third photo element (11) is provided for the sensing of the slit image through the slit (2), which [photo element] generates an output signal ($S_1$), and in that a counter for counting the count pulses is provided so that it is started by the reference pulse and stopped by the output signal ($S_1$).

2. Measuring arrangement according to claim 1, characterized in that the plate (1) is movable slidably or on an arc perpendicular or inclined to the longitudinal extent of the slit (2).

3. Measuring arrangement according to claim 2, characterized in that the plate (1) has one slit (2) and one measuring graduation (4) and undergoes a periodic one-dimensional translatory movement perpendicular to the longitudinal extent of the slit (2).

4. Measuring arrangement according to claim 2, characterized in that the plate ($1_1$) has one slit ($2_1$) and one measuring graduation ($4_1$) and undergoes a movement on an arc.

5. Measuring arrangement according to claim 2, characterized in that the plate has two slits ($2_2′$, $2_2″$) running perpendicular to one another and one measuring graduation ($4_2$) running inclined to the slits ($2_2′$, $2_2″$) and undergoes a one-dimensional periodic translatory movement inclined to the slits ($2_2′$, $2_2″$).

6. Measuring arrangement according to claim 2, characterized in that the plate (1₃) has two slits (2₃', 2₃'') running perpendicular to one another and two associated measuring graduations (4₃', 4₃'') and undergoes a movement on an arc.

## Revendications

1. Dispositif de mesure opto-électronique selon le principe de l'autocollimation pour la détermination d'écarts de position d'un objet, comprenant au moins une fente (2) éclairée et un objectif (8) pour la génération d'un faisceau de lumière en vue du balayage de l'objet à mesurer et de la reproduction du faisceau de lumière, réfléchi par l'objet, sur la fente (2) éclairée en tant qu'élément de balayage, dans lequel la position de la fente (2), dans lequel l'image de la fente coïncide avec la fente (2), constitue une mesure pour l'écart de position de l'objet et la fente (2) est disposée de façon à pouvoir subir un déplacement en translation mesurable, caractérisé en ce qu'au moins une fente (2) et au moins une graduation de mesure (4) avec un repère de référence (16) associé de façon absolue sont disposées ensemble sous forme d'une couche structurée sur une plaque (1), que pour la mesure de la translation X de la fente (2), la graduation de mesure (4) peut être balayée par une plaque de balayage (12) et par un premier élément photo-électrique (13) en vue de la génération d'impulsions de comptage, et pour la détermination de la position zéro de la translation X, le repère de référence (16) peut être balayé par la plaque de balayage (12) et par un deuxième élément photo-électrique en vue de la génération d'une impulsion de référence, qu'il est prévu, pour le balayage de l'image de la fente par la fente (2); un troisième élément photo-électrique (11) qui génère un signal de sortie (S₁), et qu'un compteur pour le comptage des impulsions de comptage est prévu de telle façon qu'il soit démarré par l'impulsion de référence et arrêté par le signal de sortie (S₁).

2. Dispositif de mesure selon la revendication 1, caractérisé en ce que la plaque (1) est mobile en translation ou en rotation perpendiculairement ou en biais par rapport à la longueur de la fente (2).

3. Dispositif de mesure selon la revendication 2, caractérisé en ce que la plaque (1) possède une fente (2) et une graduation de mesure (4) et est soumise à un mouvement translatoire périodique uniaxial perpendiculairement à la longueur de la fente (2).

4. Dispositif de mesure selon la revendication 2, caractérisé en ce que la plaque (1₁) possède une fente (2₁) et une graduation de mesure (4₁) et est soumise à un mouvement rotatif.

5. Dispositif de mesure selon la revendication 2, caractérisé en ce que la plaque (1₂) possède deux fentes (2₂', 2₂'') perpendiculaires l'une par rapport à l'autre et une graduation de mesure (4₂) s'étendant en biais par rapport aux fentes (2₂', 2₂'') et est soumise à un mouvement translatoire périodique uniaxal en biais par rapport aux fentes (2₂', 2₂'').

6. Dispositif de mesure selon la revendication 2, caractérisé en ce que la plaque (1₃) possède deux fentes (2₃', 2₃'') perpendiculaires l'une par rapport à l'autre et deux graduations de mesure (4₃', 4₃'') associées et est soumise à un mouvement rotatif.

# FIG.1

# FIG.2

FIG. 3a

FIG. 3b

0 094 481

FIG. 4

0 094 481

FIG. 5

$20_2$ $22_2$ $24_2$ $17_2$ $18_2$ $19_2$ $16_2$ $4_2$ $1_2$ $2_2''$ $2_2'$ $19_2$ $18_2$

X Y

FIG.6